# EUROPEAN PATENT APPLICATION

(11) **EP 2 749 835 A2**
(43) Date of publication of application: **02.07.2014**
(21) Application number: 13199344.6
(22) Date of filing: 23.12.2013
(51) Int. Cl.: F41G 3/06, F41G 3/16

(54) **Software-extensible gun scope and method**

(30) Priority: 31.12.2012 US 201213732153
(71) Applicant: TrackingPoint, Inc., Pflugerville, TX 78660 (US)
(72) Inventor: McHale, John Francis, Austin, TX Texas 78703 (US)
(74) Representative: Richardt Patentanwälte PartG mbB

(57) **Abstract**

An apparatus includes a digital optical scope including software-extensible functionality. The digital optical scope includes a display, an interface configured to receive data including software modules, and an optical sensor configured to capture video data associated with a view area. The digital optical scope further includes a processor coupled to the optical sensor, the display, and the interface, and includes a memory. The memory is configured to store a plurality of instructions that, when executed, cause the processor to receive a software module from the interface, to store the software module in the memory, and to execute the software module to install a capability of the digital optical scope.

## Description

The present disclosure is generally related to digital optical scopes, and more particularly to digital optical scopes configured as a gun scope for small arms firearms.

### BACKGROUND

A telescopic sight, commonly called a scope or gun scope, is a sighting device that is based on an optical refracting telescope. Typically, gun scopes are glass optic sighting devices that allow the user to see at great distances with clarity and which can be focused and adjusted by the user, using knobs. However, such devices cannot be modified after manufacture.

### SUMMARY

In an embodiment, an apparatus includes a digital optical scope including software-extensible functionality. The digital optical scope includes a display, an interface configured to receive data including software modules, and an optical sensor configured to capture video data associated with a view area. The digital optical scope further includes a processor coupled to the optical sensor, the display, and the interface, and includes a memory. The memory is configured to store a plurality of instructions that, when executed, cause the processor to receive a software module from the interface, to store the software module in the memory, and to execute the software module to install a capability of the digital optical scope.

In another embodiment, a method includes receiving a software module at an interface of an optical scope and storing the software module in a memory of the optical scope. The method further includes executing the software module using a processor of the optical scope to access a capability of the optical scope.

In still another embodiment, an apparatus includes an optical scope. The optical scope includes a plurality of circuitry including a processor and a memory, and includes an interface configured to receive a software module. The processor is configured to execute instructions stored in the memory to provide optical scope functionality. The optical scope functionality is extensible by downloading a software module through the interface.

### BRIEF DESCRIPTION OF THE DRAWINGS

FIG. 1 is a block diagram of an embodiment of a system including a software-extensible scope.
FIG. 2 is a block diagram of a system including an embodiment of a computing device configured to retrieve and provide software modules to the software-extensible scope.
FIG. 3 is a block diagram of the system of FIG. 1 including an embodiment of the software-extensible scope.
FIG. 4 is a flow diagram of an embodiment of a method of extending capabilities of the software-extensible scope by downloading and installing a software module.

In the following discussion, the same reference numbers are used in the various embodiments to indicate the same or similar elements.

### DETAILED DESCRIPTION OF ILLUSTRATIVE EMBODIMENTS

In the following detailed description of the embodiments, reference is made to the accompanying drawings which form a part hereof, and in which are shown by way of illustration of specific embodiments. It is to be understood that other embodiments may be utilized and structural changes may be made without departing from the scope of the present disclosure.

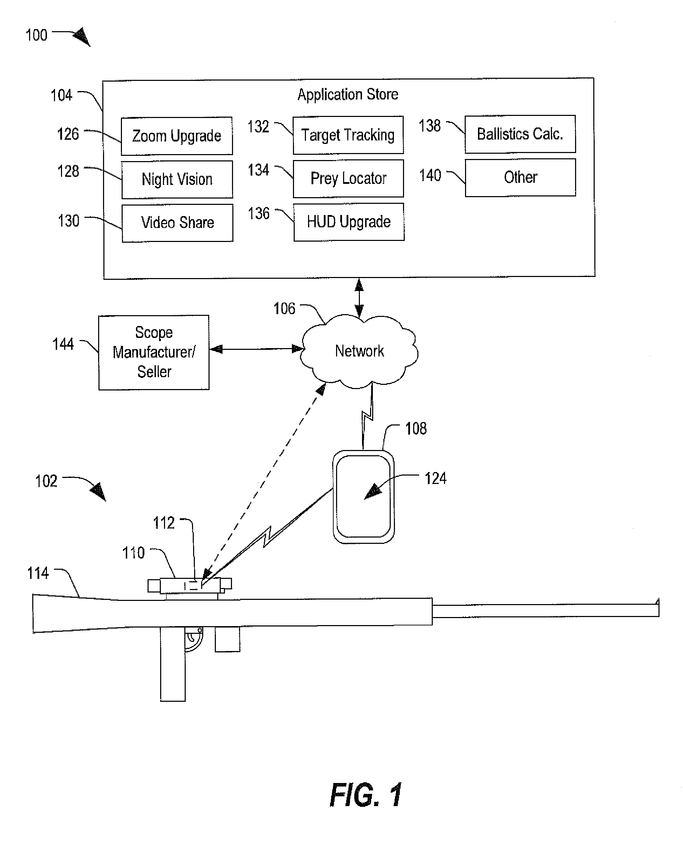

Described below are embodiments of an optical device that includes circuitry including one or more programmable processors that may execute software modules to provide functionality of the optical device. The optical device may be a gun scope (for use with a rifle or other firearm), a spotting scope, a pair of binoculars, a telescope, or another type of optical device. The optical device includes optical sensors coupled to a processor and configured to provide video data to the processor. The processor may execute one or more programs or sets of instructions to process the video data. A user may download one or more software modules through a communication link to upgrade existing functionality or to access or extend various capabilities of the optical device. In a particular example, the user may download a software module, such as a night vision software module, using the optical device or a computing device and may install the software module on the optical device, which can utilize the software module to process the video data to provide night vision functionality. A variety of software modules may be available, and enhancements to existing software may also be provided to upgrade existing capabilities. In a particular example, a user may purchase a zoom software module that, when executed by the processor, extends the zoom capability of the scope. Other software modules are also possible. One possible embodiment of a system including a software-extensible gun scope is described below with respect to FIG. 1.

FIG. 1 is a block diagram of an embodiment of a system 100 including a software-extensible scope 110. System 100 includes a firearm system 102 that may communicate with an application store 104 (such as a server coupled to the Internet) either directly through a network 106 or through a computing device 108 coupled to application store 104 through the network 106. Computing device 108 may be a smart phone, a tablet computer, a laptop, a wireless router coupled to the Internet, another electronic device, or any combination thereof.

Firearm system 102 may also communicate with a scope manufacturer/seller 144 to provide error messages and to receive trouble-shooting support. Scope manufacturer/seller 144 may include software module developers and trouble-shooters that develop instructions for execution by circuitry 112 of optical device 110. In an embodiment, software modules available through application store 104 may be verified by scope manufacturer/seller 144 prior to making such modules available for purchase or download.

Firearm system 102 includes an optical device 110 including circuitry 112 configured to communicate wirelessly with one of network 106 and computing device 108. Firearm system 102 further includes a firearm 114 coupled to the optical device 110.

In an embodiment, application store 104 may be web-store that sells other types of software applications, such as smart phone applications and tablet computer applications, for purchase and download. In an example, application store 104 may include an application that may be executed on computing device 108 to perform an install or upgrade operation into a memory of circuitry 112 within optical scope to upgrade, enhance, or otherwise access a capability of optical device 110.

Application store 104 may include a plurality of software modules that can be downloaded by a shooter and installed in optical device 110 to add or extend one or more capabilities or functionalities of the optical device 110. In the illustrated embodiment, application store 104 includes a zoom upgrade software module 126 that may be downloaded into circuitry 112 to increase the zoom capabilities of optical device 110. In a particular example, multiple zoom upgrade software modules may be available. In a particular example, optical device 110 may ship with a default zoom software module that provides a 10x zoom; however, other zoom levels may be accessed via the zoom upgrade software module 126 to provide 20x, 30x, 40x, 50x, and higher zoom levels..

Application store 104 further includes a night vision software module 128 that may be downloaded into circuitry 112 to add a night vision capability to optical device 110. Night vision software module 126, when executed, causes the processor of optical device 110 to process low-light video data to provide night vision, making it possible for the shooter to view a target in low-light conditions.

Further, application store 104 may include a video share software module 130 that may be downloaded into circuitry 112 to add or enhance a video sharing capability of optical device 110. In an example, video share software module 130, when executed, causes the processor to capture video data corresponding to a selected target, including a shot taken, and to selectively provide the captured video data to computing device 108 or to a server through network 106 to share the video data.

Application store 104 may include a target tracking software module 132 that may be downloaded into circuitry 112 to add or enhance a target tracking capability of optical device 110. In an embodiment, target tracking software module 132, when executed, causes the processor to process video data from the optical sensors to track a target, frame-by-frame, within a view area of the scope. In an example, a user may tag or designate a target within a view area of optical device 110 by interacting with button 122, and the processor may execute target tracking software module 132 to maintain the tag on the target as the target moves within the view area and/or as the user alters the orientation of optical device 110. Even if optical device 110 already includes a target tracking software module, target tracking algorithms may be improved over time, such that a user may wish to upgrade an existing target tracking software module and may download target tracking software module 132 from application store 104 to upgrade existing software.

Application store 104 may further include a prey locator software module 134 that may be downloaded into circuitry 112 and/or into computing device 108. In this instance, prey locator software module 134 may utilize global positioning satellite (GPS) data and other data to determine an approximate location of a particular animal. In an example, the other data may include range data and directional data from circuitry 112 of optical device 110.

Application store 104 may also include a heads up display upgrade software module 136 that may be downloaded into circuitry 112 to provide a change to a presentation on a display of optical device. In an embodiment, the change may include additional data, such as environmental data, orientation data, and the like. In another embodiment, the change may include a new look and feel, including color, shape, and other changes. In one particular embodiment, a display upgrade software module 136 may include a target view that includes optical elements to resemble a display view of a video game or a custom display.

Application store 104 further includes a ballistics calculator software module 138 that may be downloaded into circuitry 112 to update or replace an existing ballistics calculation. In an embodiment where the optical device 110 is implemented as a spotting scope or binoculars, such ballistics calculator software module 138 may be installed to provide a ballistics calculation function that would otherwise not be present. This calculation may be an interesting add-on for users or may provide a useful feature, particularly when the shooter may be utilizing a firearm that does not include the optical device 110. Application store 104 may further include a variety of other software modules 140 that may be downloaded into circuitry 112 to access, upgrade, or unlock other functions or capabilities of optical device 110.

Computing device 108 includes a display interface 124, which may include a touch-sensitive interface with which a user may interact to access application store 104.

In an embodiment, a user may access an Internet browser application to access the application store 104 to purchase and download one or more of the software module 126, 128, 130, 132, 134, 136, 138, and 140. Computing device 108 receives the selected software module and selectively provides the selected software module to circuitry 112 of optical device 110 through a wireless communication link (or through a wired link, such as a universal serial bus (USB) connection).

In an embodiment, a user interacts with the display interface 124 of computing device 108 to download a selected one of software modules 126, 128, 130, 132, 134, 136, 138, and 140and to execute the selected one to install instructions on optical device 110 to access a desired functionality of optical device 110. In another embodiment, computing device 108 transfers the selected one to a memory of circuitry 112 for execution by a processor of optical device 110.

In an embodiment, software modules 126, 128, 130, 132, 134, 136, 138, and 140 may be free for download for subscribers. In another embodiment, software modules 126, 128, 130, 132, 134, 136, 138, and 140 may be available for purchase. In an embodiment, circuitry 112 of optical device 110 may include a short-range wireless transceiver configured to communicate wirelessly with computing device 108. Additionally or in the alternative, circuitry 112 may include a longer range transceiver that may communicate wirelessly with a network, such as a cellular, digital, or satellite network.

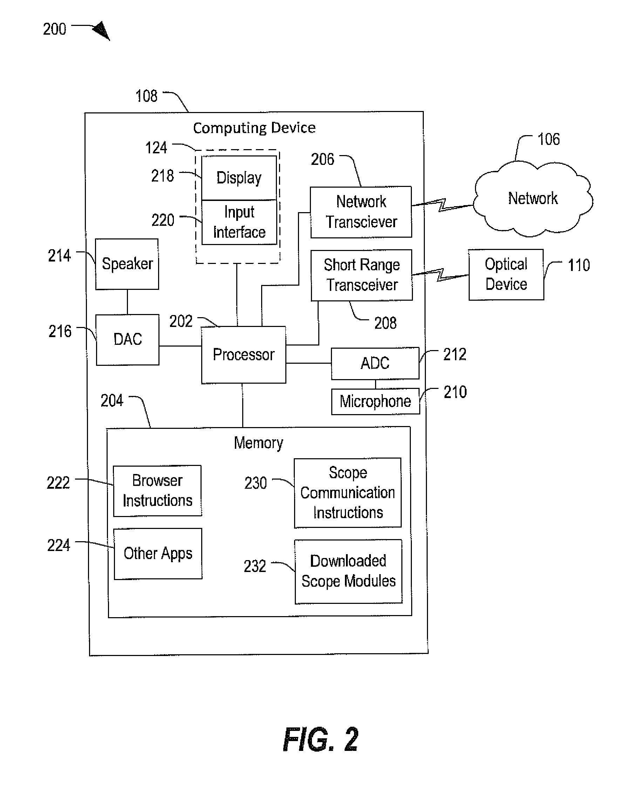

Computing device 108 may be a tablet computer, a laptop computer, a smart phone, or another computing device configurable to communicate with application store 104 through network 106 and to communicate with firearm system 102 through a wired or wireless communication link. One possible example of a computing device 108 is described below with respect to FIG. 2.

FIG. 2 is a block diagram of a system 200 including an embodiment of the computing device 108 of FIG. 1 configured to retrieve and provide software modules to the software-extensible scope. Computing device 108 is configured to couple to network 106 through a first communication link and to optical device 110 through a second communication link. In an example, the first communication link may be a satellite, digital, cellular, or other communication link configured to communicate with a network, such as a cellular network, a digital network, a satellite network, the Internet, or another wide-area network. The second communication link may be a short-range wireless link, such as a Bluetooth® communication link, an IEEE 802.11x communication link, or another short-range wireless link or may be a wired link, such as a universal serial bus cable or other wired connection.

Computing device 108 includes a processor 202 coupled to display interface 124 and to memory 204. Computing device 108 further includes a network transceiver 206 coupled to processor 202 and configured to communicate with network 106. Computing device 108 also includes a short-range transceiver 208 coupled to processor 202 and configured to communicate with optical device 110. Computing device 108 further includes a microphone 210 coupled to processor 202 through an analog-to-digital converter (ADC) 212, and includes a speaker 214 coupled to processor 202 through a digital-to-analog converter (DAC) 216. Display interface 124 includes a display component 218 and an input interface 220, such as a touch-sensitive interface. In a particular example, computing device 108 may be a smart phone or other communications device for facilitating voice and/or video communications with another user through a network.

Memory 204 includes network browser instructions 222 that, when executed by processor 202, causes processor 202 to generate a graphical user interface for display on display 218 and to provide one or more user-selectable options accessible by the user to interact with the graphical user interface in order to visit one or more servers coupled to network 106, such as application store 104. Memory 204 further includes other applications 224, such as calendar applications, notepad applications, contact or address book applications, games, and other programs and utilities that, when executed, cause processor 202 to perform a variety of functions. Memory 204 further includes scope communication instructions 230 that, when executed, cause processor 202 to communicate with optical device 110 using short range transceiver 208. Further, memory 204 may include downloaded scope modules 232, such as software modules 126, 128, 130, 132, 134, 136, 138, and 140 in FIG. 1, which may have just been downloaded and/or that may have already been provided to optical device 110.

In an embodiment, a user may interact with display interface 124 to access application store 104 to download a selected one of software modules 126, 128, 130, 132, 134, 136, 138, and 140. The user may then access the selected software module to execute the module, causing the processor to extract one or more sets of instructions and to provide them to optical device 110 via short range wireless transceiver 208, providing an upgraded or new capability within optical device 110. Alternatively, the user may access scope communication instructions 230 that, when executed, cause processor 202 to provide the software module to optical device 110. In an example, the software module provided to optical device 110 may be the entire downloaded software module (unexecuted or compressed) or may be a set of instructions derived from or extracted from the software module.

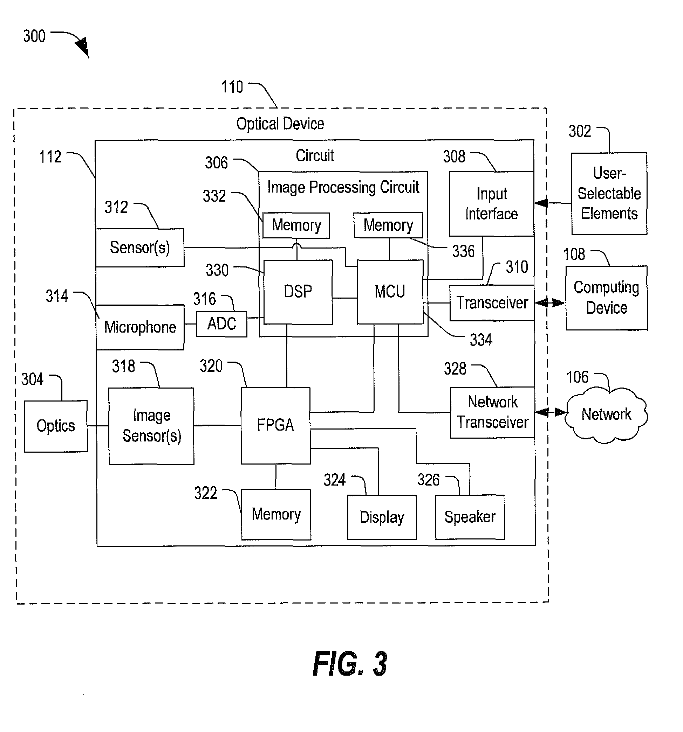

As previously discussed, the software module may be provided to optical device 110 to upgrade, enhance or access functionality of capabilities of the optical device, such as adding night vision or other capabilities. To allow for software-extensibility, optical device 110 includes one or more programmable processors with associated memories for storing instruction sets. One possible example of an optical device 110 that includes functionality that may be upgraded or extended by installing one or more software modules is described below with respect to FIG. 3.

FIG. 3 is a block diagram of a system 300 including an embodiment of the software-extensible scope of FIG. 1. System 300 includes optical device 110 configured to couple to one or more user-selectable elements 302, such as buttons, rockers, or other input elements. System 300 further includes computing device 108 configured to couple to optical scope. System 300 is further coupled to network 106, either directly (as shown) or through computing device 108 as previously discussed.

Optical device 110 includes optics 304 configured to direct light toward image (optical) sensors 318 of circuitry 112. Circuitry 112 can include an image processing circuit 306, which may include a digital signal processor (DSP) 330 and an associated memory 332 and a microcontroller unit (MCU) 334 and an associated memory 336. MCU 334 may be coupled to user-selectable elements 302 via an input interface 308. MCU 334 may also be coupled to computing device 108 through a transceiver 310 and/or to network 106 through a network transceiver 328.

Circuitry 112 further includes a field programmable gate array (FPGA) 320 including one or more inputs coupled to outputs of optical sensors 318. FPGA 320 may further include an input/output interface coupled to a memory 322, which can store data and instructions. FPGA 320 can include a first output coupled to a display 324 for displaying images and/or text and a second output coupled to a speaker 326. Circuitry 112 further includes one or more sensors 312 coupled to MCU 334. Further, circuitry 112 further includes a microphone 314 coupled to DSP 330 via an analog-to-digital converter (ADC) 316. Circuitry 112 may also include a range finder circuit (not shown), such as a laser range finder or other range finder circuit, that may be coupled to one of the FPGA 320 and the image processing circuit 306 and that may cooperate with sensors 312 to receive reflected data that can be used to determine the range to a target. DSP 330 and MCU 334 are coupled to FPGA 320.

Sensors 312 are configured to measure one or more environmental parameters (such as wind speed and direction, humidity, temperature, and other environmental parameters) and/or to measure optical elements, such as reflected laser range finding data, and to provide the measurement data to MCU 334. Circuitry 112 can further include a microphone 314 to capture sounds and to convert the sounds into an electrical signal, which it can provide to ADC 316, which may include an output coupled to an input of DSP 330. In some embodiments, the microphone 314 may be external to circuitry 112, and circuitry 112 may instead include an audio input jack or interface for receiving an electrical signal from microphone 314. In a particular example, the speaker 326 and microphone 314 may be incorporated in a headset worn by a user that is coupled to circuitry 112 through an input/output interface (not shown).

In an example, transceiver 310 can be part of an input/output interface, such as a Universal Serial Bus (USB) interface or another wired (or wireless) interface for communicating data to and receiving data from computing device 108, which may be configured to communicate bi-directionally with network 106. In a particular example, transceiver 310 is a wireless transceiver for communicating data to and receiving data from computing device 108. In an embodiment, transceiver 310 communicates with computing device 108 to establish a communication link, receives a software module or a set of instructions related to a software module and stores the instructions one of memory 332, 336, and 322, depending on which of the DSP, 330, MCU 334, and FPGA 320 will be executing the instructions to provide a particular function.

Network transceiver 328 can communicate with network 106 to retrieve a selected software module from application store 104. In an example, a zoom upgrade software module 126 may be installed in memory 322 for execution by FPGA 320, in memory 332 for execution by DSP 330, and/or in memory 336 for execution by MCU 334 to process video data from optical sensors 318 to provide enhanced zoom functionality. In another example, a prey locator software module 134 may be installed in memory 336 for execution by MCU 334 to communicate orientation data and/or range data from sensors 312 to computing device 108 to determine a location of an animal. Other software modules may also be downloaded and/or installed as desired.

In an example, DSP 330 executes instructions stored in memory 332 to process audio data from microphone 314 and ADC 316. MCU 334 processes instructions and settings data stored in memory 336 and is configured to control operation of circuitry 112. FPGA 320 is configured to process image data from image (optical) sensors 318. FPGA 320 processes the image data to enhance image quality through digital focusing and gain control. Further, FPGA 320 can perform image registration and stabilization. FPGA 320 may cooperate with DSP 330 to perform optical target tracking within the view area of the portable optical device that incorporates circuitry 112. FPGA 320 further cooperates with MCU 334 to mix the video data with overlay data, such reticle information and target tracking information (from DSP 330) and provides the resulting image data to display 324. As a target moves within the view area, DSP 330 can perform target tracking and can apply a visual marker to the target shown on display 324. The FPGA 320, DSP 330 and MCU 334 can cooperate to modify a portion of the media content sent to display 324 based on signals received from computing device 108 and/or from network 106. In particular, any functionality or capability provided by optical device 110 may be upgraded, adjusted, or added through installation of a selected software module.

If optical device 110 is implemented as a gun scope, circuitry 112 may be modified, extended, or otherwise enhanced through selective installation of software modules. Each software module may control one or more elements of circuitry 112 to provide the desired functionality.

While the example of FIG. 3 depicted some components of circuitry 112, at least some of the operations of circuitry 112 may be controlled using programmable instructions. In one instance, such instructions may be upgraded and/or replaced using transceiver 310 or 324. In one instance, the replacement instructions may be downloaded to a portable storage device, such as a thumb drive or computing device 108, which may then be coupled to transceiver 310. The user may then select and execute the upgrade instructions by interacting with the user-adjustable elements 302 or with user-selectable elements on display interface 124 of computing device 108.

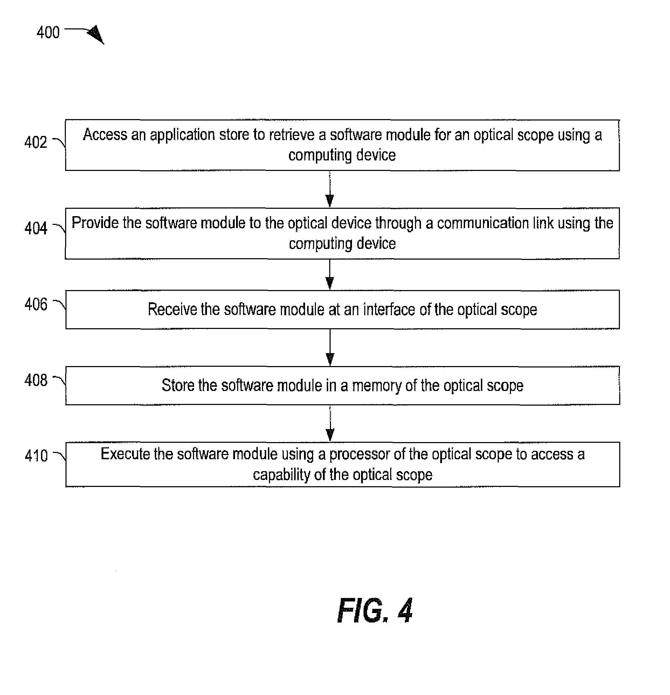

In the above-examples, a software-extensible optical device is described that can have programmable functionality, where the programs or software modules may be downloaded directly to a memory of the optical device 110 from a network 106 or that may be downloaded through an intermediary device, such as computing device 108. One possible example of a method of extending capabilities of an optical device is described below with respect to FIG. 4.

FIG. 4 is a flow diagram of an embodiment of a method 400 of extending capabilities of the software-extensible scope by downloading and installing a software module. At 402, an application store is accessed to retrieve a software module for an optical scope using a computing device. In an embodiment, the user may interact with an application store application or an Internet browser application to identify, purchase, and download the software module.

Advancing to 404, the software module is provided to the optical device 110 through a communication link using the computing device 108. In an embodiment, the software module is sent through the communication link for installation in a memory of the optical scope 110. In another embodiment, the user may select the software module, which may be executed on computing device 108, causing the computing device 108 to send a set of instructions to the optical device 110 through the communication link. In an alternative embodiment, the computing device 108 may communicate the software module to the optical device 110 through a wired connection or by transferring the software module onto a flash memory device (not shown), which can be coupled to a port on the optical device 110 to transfer the software module.

In the above-described portion of method 400, accessing (block 402) and providing (block 404) are performed by a computing device. In contrast, the following portion of method 400 is performed by the optical device, such as a software-extensible rifle scope.

Proceeding to 406, the software module is received at an interface of the optical device. As discussed above, the software module may be received from a communication link, which may be wireless or wired. In an embodiment, the software module is received via a wireless or wired communication link between circuitry 112 and computing device 108. In another embodiment, the software module is received from a network, such as the Internet, through a wireless communication link.

Moving to 410, the software module is stored in a memory of the optical scope. The software module may be stored as one or more sets of instructions into one or more memories, such as memories 322, 332, and 336 of circuitry 112. Continuing to 412, the software module is executed using a processor of the optical scope to access a capability of the optical scope. In an embodiment, the software module may be executed by one of the FPGA 320, the DSP 330, and the MCU 334 to extract and install one or more portions or sets of instructions from the software module.

In an embodiment, the software module may be a night vision module that, when executed by the processor, causes the processor to process video data to provide night vision capability via the optical scope. In another embodiment, the software module may be a zoom module that, when executed, alters a zoom capability of the optical scope. In still another embodiment, the software module may be a prey score calculator module that, when executed, causes the processor to process the video data to determine a preliminary prey score for an antlered animal. In yet another embodiment, the software module includes a communications module that, when executed, facilitates bi-directional communication between a headset coupled to the optical scope and a remote device. In another embodiment, the software module includes a target tracking module that, when executed, causes the processor to track a selected target within video data. The software modules may include any number of modules and are configured to provide a desired functionality using circuitry 112 of optical device 110.

In conjunction with the systems and methods described above with respect to FIGs. 1-4, an optical device is described that includes software-extensible functionality. The optical device includes one or more transceivers through which optical device may receive instructions and/or software modules for installation and execution by an internal processor to provide enhanced or new capabilities. The optical device may communicate directly with an application store to receive the software module or may receive the software module indirectly through a computing device, such as a smart phone.

Although the present invention has been described with reference to preferred embodiments, workers skilled in the art will recognize that changes may be made in form and detail without departing from the scope of the invention.

## Claims

1. An apparatus comprising:
a digital optical scope including software-extensible functionality, the digital optical scope including:
a display;
an interface configured to receive data including software modules;
an optical sensor configured to capture video data associated with a view area;
a processor coupled to the optical sensor, the display, and the interface; and
a memory configured to store a plurality of instructions that, when executed, cause the processor to receive a software module from the interface, to store the software module in the memory, and to execute the software module to install a capability of the digital optical scope.

2. The apparatus of claim 1, wherein the software module comprises a night vision module that, when executed, causes the processor to process the video data to provide night vision.

3. The apparatus of claim 1, further comprising:
a firearm coupled to the digital optical scope; and
wherein the software module comprises a competition mode module that, when executed, causes the processor to reacquire a selected tag location on a target, shot-after-shot.

4. The apparatus of claim 1, wherein the software module comprises a zoom module that, when executed, alters a zoom capability of the digital optical scope.

5. The apparatus of claim 1, further comprising:
at least one input/output port configured to couple to a headset; and
wherein the software module includes a voice communication module that, when executed, interacts with the at least one input/output port and the interface to provide bi-directional audio communications between a user wearing the headset and a remote device.

6. The apparatus of claim 1, wherein the software module comprises a ballistics calculator configurable to calculate a ballistics solution relative to a selected target.

7. The apparatus of claim 1, further comprising a portable computing device coupled to the interface through a communication link; and
wherein the portable computing device is configured to download the software module from a network and to provide the software module to the interface of the digital optical scope.

8. The apparatus of claim 1, wherein the software module comprises a prey score calculator module that, when executed, causes the processor to process the video data to determine a preliminary prey score for an antlered animal.

9. The apparatus of claim 1, wherein the software module comprises a live hunt module that, when executed, causes the processor to capture a portion of the video data and to provide the portion to the interface for transmission as a video stream.

10. The apparatus of claim 1, wherein the software module comprises a target tracking module that, when executed, causes the processor to track a selected target within the video data.

11. An apparatus comprising:
an optical scope comprising:
a plurality of circuitry including a processor and a memory, and including an interface configured to receive a software module, the processor configured to execute instructions stored in the memory to provide optical scope functionality; and
wherein the optical scope functionality is extensible by downloading a software module through the interface.

12. The apparatus of claim 11, wherein the software module comprises a night vision module that, when executed, causes the processor to process the video data to provide night vision.

13. The apparatus of claim 11, wherein the software module comprises a prey score calculator module that, when executed, causes the processor to process the video data to determine a preliminary prey score for an antlered animal.

14. The apparatus of claim 11, wherein the software module comprises a live hunt module that, when executed, causes the processor to capture a portion of the video data and to provide the portion to the interface for transmission as a video stream.

15. The apparatus of claim 11, wherein the software module comprises a target tracking module that, when executed, causes the processor to track a selected target within the video data.
